# EUROPÄISCHE PATENTSCHRIFT

(11) **EP 3 847 414 B1**
(45) Veröffentlichungstag und Bekanntmachung des Hinweises auf die Patenterteilung: **01.11.2023**
(21) Anmeldenummer: 19758950.0
(22) Anmeldetag: 22.08.2019
(51) Int. Cl.: G01B 5/00, G01B 5/255, G01B 7/315, G01B 11/275, G01B 21/26

(54) **RADHALTER**
WHEEL HOLDER
SUPPORT DE ROUE

(30) Priorität: 06.09.2018 DE 102018215165
(43) Veröffentlichungstag der Anmeldung: 14.07.2021
(73) Patentinhaber: Beissbarth Automotive Testing Solutions GmbH, 80993 München (DE)
(72) Erfinder: PETERS, Stefanie, 64289 Darmstadt (DE); ILCHEV, Trendafil, 81369 München (DE); WAGMANN, Christian, 80538 München (DE); HOFMANN, Claudia, 81549 München (DE)
(74) Vertreter: Schmitt-Nilson Schraud Waibel Wohlfrom Patentanwälte Partnerschaft mbB
(86) Internationale Anmeldenummer: PCT/EP2019/072439
(87) Internationale Veröffentlichungsnummer: WO 2020/048781

(56) Entgegenhaltungen:
- WO-A1-2018/046222
- US-A- 3 709 451
- US-A1- 2014 115 906

## Beschreibung

Die Erfindung betrifft einen Radhalter, insbesondere einen Radhalter zur Fahrzeugvermessung, der an einem Rad eines Fahrzeugs, insbesondere eines Kraftfahrzeugs, montierbar ist.

### Stand der Technik

Zur Fahrwerksvermessung werden häufig Radhalter, die Sensoren und/oder Messmarken ("Targets") tragen können, an den Rädern des zu vermessenden Fahrzeugs montiert.

Derartige Radhalter werden beispielsweise in US 2014/115906 A1, WO 2018/046222 A1 und US 3 709451 A beschrieben.

Die Handhabung solcher Radhalter, insbesondere ihre Montage und Demontage an bzw. von den Rädern des Fahrzeugs, ist aufwändig und schwierig.

Beispielhaft für Radhalter, die am Reifen des Rades aufliegen, sind folgende Schritte nötig:
- Transportieren des Halters vom Lagerort zum Rad;
- Einstellen des Halters auf den ungefähren Raddurchmesser, so dass der Durchmesser des Radhalters größer als der Raddurchmesser und kleiner als der Durchmesser des Radhauskastens ist;
- Anlegen, korrektes Positionieren und manuelles Fixieren des Radhalters an dem Rad, so dass er nicht herunterfällt; und
- Spannen der Haltearme des Radhalters, damit der Radhalter während der Messung sicher am Rad befestigt ist

Folgendes mindert eine komfortable und schnelle Anbringung:
- Es ist kein spezieller Halte- bzw. Tragegriff vorhanden.
- Das Anbringen ist nur mit zwei Händen möglich, da
   1. der Radhalter am Rad immer mit mindestens einer Hand gehalten werden muss, da er ansonsten herunterfällt und die zweite Hand für das Spannen und Fixieren benötigt wird, oder
   2. eine Einhandbedienung möglich ist, zum Spannen aber umgegriffen werden muss, oder
   3. beide Hände für das korrekte Positionieren und Halten der Arme benötigt werden, wobei eine Hand zusätzlich einen Verriegelungshebel betätigen muss.

Zusätzlich besteht immer die Gefahr, dass die Messergebnisse der Fahrwerksvermessung durch eine fehlerhafte und/oder ungenaue Montage der Radhalter verfälscht werden.

Es ist eine Aufgabe der Erfindung, die Montage und Demontage eines Radhalters an den Rädern eines Fahrzeugs zu vereinfachen und die Gefahr einer fehlerhaften und/oder ungenauen Montage zu reduzieren.

### Offenbarung der Erfindung

Ein erfindungsgemäßer Radhalter wird durch den unabhängigen Patentanspruch 1 definiert. Die abhängigen Patentansprüche beschreiben optionale Merkmale eines erfindungsgemäßen Radhalters.

Ein erfindungsgemäßer Radhalter, der zur Befestigung an einem Rad, insbesondere an einem Rad eines Kraftfahrzeugs, vorgesehen ist, umfasst wenigstens zwei Arme, die sich von einem Zentrum des Radhalters in radialer Richtung nach außen erstrecken. Jeder der Arme weist wenigstens ein bewegliches Element auf, das in radialer Richtung beweglich ist, um die Länge des Armes in radialer Richtung variieren zu können. Der Radhalter umfasst darüber hinaus einen beweglichen Verriegelungsmechanismus, der in eine Verriegelungsposition bewegbar ist, in der er die beweglichen Elemente gegen das Rad spannt und in einer gespannten Position fixiert, ein Verriegelungselement, das derart ausgebildet ist, dass der Verriegelungsmechanismus durch Betätigen des Verriegelungselements in die Verriegelungsposition schwenkbar ist; und ein verzahntes Element, das mechanisch mit den beweglichen Elementen gekoppelt ist, wobei der Verriegelungsmechanismus in das verzahnte Element eingreift, wenn sich der Verriegelungsmechanismus in der Verriegelungsposition befindet.

In einer Ausführungsform umfasst der Radhalter auch ein Entriegelungselement, das derart ausgebildet ist, dass eine Fixierung der beweglichen Elemente durch Betätigen des Entriegelungselements lösbar ist.

In einer Ausführungsform umfasst der Radhalter wenigstens einen Tragegriff, der zum Tragen des Radhalters vorgesehen ist. In einer Ausführungsform ist wenigstens einer von dem Verriegelungselement und dem Entriegelungselement in oder an dem Tragegriff ausgebildet. Mittels des Verriegelungs- bzw. Entriegelungselements wird ein Verriegelungsmechanismus betätigt, der den Halter sicher an das Rad spannt. Das Verriegelungselement und das Entriegelungselement sind insbesondere in unmittelbarer Bediennähe vorgesehen, so dass kein Umgreifen nötig ist.

Die Handhabung des Radhalters kann auf diese Weise deutlich vereinfacht werden.

Ein gemäß einem Ausführungsbeispiel der Erfindung ausgebildeter Radhalter ermöglicht eine tatsächliche Einhandbedienung.

Der Tragegriff mit dem Verriegelungselement und dem Entriegelungselement sind insbesondere so ausgebildet, dass die Bedienung und das Anbringen des Halters an einem Rad sowohl mit der rechten als auch linken Hand möglich ist. Der Radhalter ist daher für Recht- und Linkshänder gleichermaßen gut geeignet.

In einer Ausführungsform ist es möglich, den Radhalter vorab auf den ungefähren Durchmesser des Rades einzustellen, so dass der Durchmesser des Radhalters etwas größer als der Durchmesser des Rades ist, der Radadapter aber immer noch in den Radkasten des Rades eingeführt werden kann. Die beweglichen Elemente des Radhaltes sind dabei so gekoppelt, dass sie sich synchron miteinander bewegen. D.h. der Durchmesser des Radhalters wird durch Bewegen eines der beweglichen Elemente symmetrisch zum Zentrum des Radhalters verändert.

Ein Radhalter gemäß einem Ausführungsbeispiel der Erfindung kann durch Betätigen des Verriegelungselements einfach und sicher an einem Rad befestigt und durch Betätigen des Entriegelungselements leicht und schnell von dem Rad gelöst werden. Das Verriegelungselement und das Entriegelungselement können jeweils einfach mit einer einzigen Hand betätigt werden. Eine zweite Hand ist bei einem erfindungsgemäßen Radhalter nicht erforderlich, um eine hohe Genauigkeit bei der Ausrichtung des Halters am Rad zu erreichen.

In einer Ausführungsform ist wenigstens eines von dem verzahnten Element und dem Verriegelungsmechanismus bogen- oder kreisförmig ausgebildet. Auf diese Weise können das verzahnten Element und die Verzahnung des Verriegelungsmechanismus durch Schwenken des Verriegelungsmechanismus effizient miteinander in Eingriff gebracht werden.

In einer alternativen Ausführungsform ist der Verriegelungsmechanismus ohne Verzahnung ausgebildet. In diesem Fall ist statt des verzahnten Elements ein unverzahntes Fixierelement vorgesehen, das beispielsweise mit dem der Verriegelungsmechanismus verklemmbar ist, um die beweglichen Elemente zu fixieren.

Der Verriegelungsmechanismus kann insbesondere ein exzentrisches Element umfassen, dass gegen ein rundes Fixierelement beweglich und mit dem Fixierelement verklemmbar ist.

In einer Ausführungsform ist der Verriegelungsmechanismus wenigstens teilweise elastisch ausgebildet. Der Verriegelungsmechanismus ist insbesondere so ausgebildet, dass die Verzahnung des Verriegelungsmechanismus (geringfügig) nachgeben kann. Bei einem wenigstens teilweise elastisch ausgebildeten Verriegelungsmechanismus kann die Verzahnung des Verriegelungsmechanismus (geringfügig) nachgeben, wenn die Verzahnungen des Verriegelungsmechanismus und des verzahnten Elements in einer ungünstigen Position zueinander angeordnet sind, in der die Gefahr besteht, dass sich der Verriegelungsmechanismus und das verzahnte Element gegenseitig blockieren. Insbesondere kann ein Zahn der elastischen Verzahnung, der bei einem nicht elastisch ausgebildeten Verriegelungsmechanismus zu einer Blockade führen könnte, in eine benachbarte Zahnlücke der gegenüberliegenden Verzahnung rutschen. Auf diese Weise kann ein unerwünschtes Blockieren der Verzahnungen, das die Funktionsfähigkeit der Verriegelungsvorrichtung beeinträchtigen würde, vermieden werden.

In einer Ausführungsform ist der Verriegelungsmechanismus durch einen Drahtzug (Bowdenzug) mechanisch mit dem Verriegelungselement gekoppelt. Ein Drahtzug stellt eine zuverlässige, kostengünstige und einfach zu bedienende mechanische Kopplung zwischen dem Verriegelungsmechanismus und dem Verriegelungselement zur Verfügung.

In einer alternativen Ausführungsform ist der Verriegelungsmechanismus hydraulisch mit dem Verriegelungselement gekoppelt. Durch eine hydraulische Kopplung kann auf einfache Weise eine nicht-geradlinige Verbindung zwischen dem Verriegelungsmechanismus und dem Verriegelungselement realisiert werden.

In einer Ausführungsform umfasst der Radhalter einen Verriegelungselement-Fixiermechanismus, der ausgebildet ist, das Verriegelungselement in einer verriegelten Position zu fixieren. Auf diese Weise kann die Fixierung der beweglichen Elemente aufrechterhalten werden, wenn die Hand des Bedieners vom Verriegelungselement entfernt wird.

In einer Ausführungsform umfasst der Radhalter ein elastisches Element (Federelement), das ausgebildet ist, das Verriegelungselement und den Verriegelungsmechanismus in eine Ausgangsposition zu bewegen, in der die beweglichen Elemente nicht fixiert sind. Durch ein solches Federelement kann die Handhabung des Radhalters noch weiter vereinfacht werden, da das Verriegelungselement nicht manuell in seine Ausgangsposition bewegt werden muss.

Im Folgenden wird ein Ausführungsbeispiel eines erfindungsgemäßen Radhalters unter Bezugnahme auf die beigefügten Figuren näher beschrieben.

### Kurze Beschreibung der Figuren

Figur 1 zeigt eine schematische Darstellung eines Rades mit einem an dem Rad montierten Radhalter.

Die Figuren 2 und 3 zeigen jeweils eine perspektivische Ansicht eines Radhalters gemäß einem Ausführungsbeispiel der Erfindung.

Figur 4 zeigt ein Ausführungsbeispiel eines rotationselastischen Elements in einer perspektivischen schematischen Darstellung.

Figur 5 zeigt das rotationselastische Element im eingebauten Zustand.

Figur 6 zeigt eine vergrößerte Ansicht einer Verriegelungsvorrichtung gemäß einem Ausführungsbeispiel der Erfindung.

Figur 7 zeigt ein erstes Ausführungsbeispiel eines Verriegelungselements gemäß einem Ausführungsbeispiel der Erfindung.

Figur 8 zeigt ein zweites Ausführungsbeispiel eines Verriegelungselements gemäß einem Ausführungsbeispiel der Erfindung.

### Figurenbeschreibung

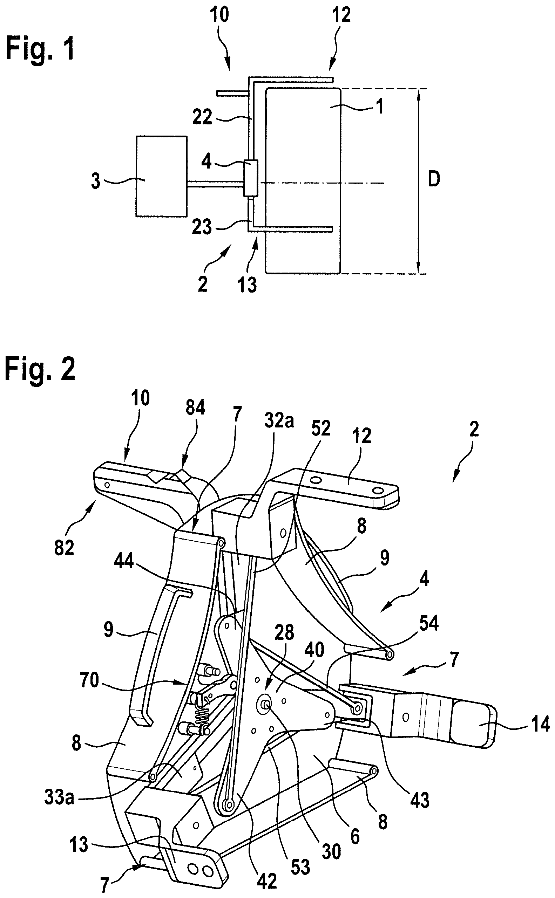

Die Figur 1 zeigt eine schematische Darstellung eines Rades 1 mit einem an dem Rad 1 montierten Radhalter 2, an dem ein Target 3 angebracht ist.

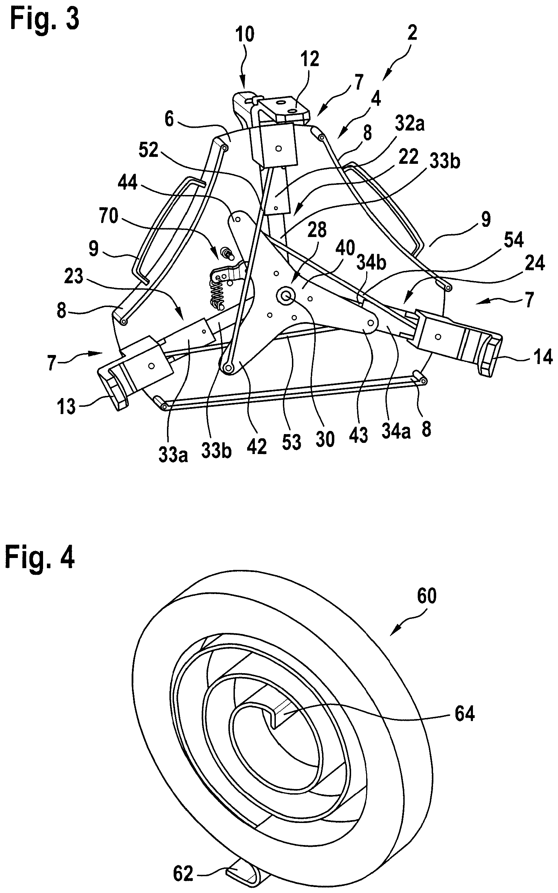

Die Figuren 2 und 3 zeigen jeweils eine perspektivische Ansicht eines Radhalters 2 gemäß einem Ausführungsbeispiel der Erfindung.

Der Radhalter 2 hat ein Gehäuse 4 mit einer Grundplatte 6 und drei Seitenwänden 8, die sich orthogonal von den Rändern Grundplatte 6 in die gleiche Richtung erstrecken. Der Radhalter 2 hat mehrere Tragegriffe 9, 10, welche die Handhabung des Radhalters 2 erleichtern.

Eine zentrale Achse 30 erstreckt sich orthogonal zur Grundplatte 6 durch einen zentralen Bereich (Zentrum) 28 der Grundplatte 6. Drei Arme 22, 23, 24 erstrecken sich vom Zentrum 28 der Grundplatte 6 ausgehend durch Öffnungen 7, die zwischen den Seitenwänden 8 ausgebildet sind, in radialer Richtung nach außen. Die Arme 22, 23, 24 erstrecken sich im Wesentlichen parallel zur Ebene der Grundplatte 6.

Die Arme 22, 23, 24 umfassen jeweils ein zentrumsnahes stationäres inneres Element 32b, 33b, 34b und ein bewegliches äußeres Element 32a, 33a, 34a, das entlang des jeweiligen inneren Elements 32b, 33b, 34b in radialer Richtung verschiebbar ist. Die Länge der Arme 22, 23, 24 in radialer Richtung kann so durch Bewegen, insbesondere Verschieben, der äußeren Elemente 32a, 33a, 34a entlang der inneren Elemente 32b, 33b, 34b variiert werden.

An den äußeren, von der zentralen Achse 30 abgewandten, Enden der äußeren Elemente 32a, 33a, 34a sind Klauen 12, 13, 14 ausgebildet, die sich im Wesentlichen rechtwinklig zu den Armen 22, 23, 24 erstrecken. Die Klauen 12, 13, 14 sind dazu ausgebildet, auf der Lauffläche eines in den Figuren 2 und 3 nicht gezeigten Rades 1 aufzuliegen, wenn der Radhalter 2 an einem Rad 1 angebracht ist (siehe Figur 1).

Durch Bewegen der äußeren Elemente 32a, 33a, 34a in radialer Richtung nach außen kann die Länge der Arme 22, 23, 24 verlängert werden, damit der Radhalter 2 einfach in Axialrichtung des Rades 1 auf das Rad 1 aufgebracht werden kann. Durch Bewegen der äußeren Elemente 32a, 33a, 34a nach innen können die Armlängen verkürzt werden, um den Radhalter 2 am Rad 1 zu fixieren, wie es in der Figur 1 gezeigt ist.

Ein Radhalter 2 gemäß einem Ausführungsbeispiel der Erfindung umfasst darüber hinaus ein zentrales Rotationselement 40, das so auf der zentralen Achse 30 im Zentrum 28 der Grundplatte 6 angebracht ist, dass es um die zentrale Achse 30 rotierbar ist. Das Rotationselement 40 erstreckt sich in einer Ebene, die im Wesentlichen parallel zur Ebene der Grundplatte 6 ausgerichtet ist.

Jedes der beweglichen Elemente 32a, 33a, 34a ist durch jeweils ein Kopplungselement 52, 53, 54 mit dem Rotationselement 40 verbunden. Die Kopplungselemente 52, 53, 54 sind jeweils beweglich mit dem Rotationselement 40 und den beweglichen Elementen 32a, 33a, 34a verbunden, so dass die Kopplungselemente 52, 53, 54 gegenüber dem Rotationselement 40 und den beweglichen Elementen 32a, 33a, 34a in einer Ebene, die sich parallel zur Ebene der Grundplatte 6 erstreckt, schwenkbar sind.

Die Kopplungselemente 52, 53, 54 transformieren eine Rotationsbewegung des Rotationselements 40 um die zentrale Achse 30 in Translationsbewegungen der beweglichen Elemente 32a, 33a, 34a in radialer Richtung. Die beweglichen Elemente 32a, 33a, 34a können so durch Drehen des Rotationselements 40 um die zentrale Achse 30 in radialer Richtung entlang der inneren Elemente 32b, 33b, 34b bewegt werden, um die Länge der Arme 22, 23, 24 zu variieren.

Durch das Rotationselement 40 und die Kopplungselemente 52, 53, 54 sind die beweglichen Elemente 32a, 33a, 34a der Arme 22, 23, 24 so miteinander gekoppelt, dass sich alle beweglichen Elemente 32a, 33a, 34a synchron miteinander bewegen, wenn eines der beweglichen Elemente 32a, 33a, 34a bewegt wird. Der durch den Abstand zwischen den Krallen 12, 13, 14 definierte Durchmesser des Radhalters 2 kann daher durch Bewegen eines der beweglichen Elemente 32a, 33a, 34a auf einfache Weise so voreingestellt werden, dass der Radhalter 2 einfach, insbesondere mit nur einer Hand, auf ein Rad 1 aufgebracht werden kann.

In dem in den Figuren 2 und 3 gezeigten Ausführungsbeispiel sind die Kopplungselemente 52, 53, 54 als Kopplungsstangen ausgebildet. Die Kopplungselemente 52, 53, 54 können auch eine andere Form haben, solange sie die zuvor beschriebene Funktion erfüllen, eine Rotationsbewegung des Rotationselements 40 in Translationsbewegungen der beweglichen Elemente 32a, 33a, 34a zu transformieren.

In dem in den Figuren 2 und 3 gezeigten Ausführungsbeispiel ist das Rotationselement 40 mit drei Rotationselementarmen (Vorsprüngen) ausgebildet, die sich von einem zentralen Bereich des Rotationselements 40 an der zentralen Achse 30 in radialer Richtung nach außen erstrecken. Die Kopplungselemente 52, 53, 54 sind jeweils schwenkbar mit einem der äußeren Bereiche der Rotationselementarme verbunden. Durch eine derartige Ausgestaltung des Rotationselements 40 kann mit geringem Materialeinsatz eine mechanische Übersetzung realisiert werden, welche die Wegstrecke, über die sich die beweglichen Elemente 32a, 33a, 34a in radialer Richtung bewegen, wenn das Rotationselement 40 um einen vorgegebenen Winkel um die zentrale Achse 30 rotiert wird, vergrößert.

Die in den Figuren gezeigten Rotationselementarme / Vorsprünge des Rotationselements 40 sind aber kein notwendiges Merkmal der Erfindung. Das Rotationselement 40 kann beispielsweise auch als runde, insbesondere als kreisförmige oder elliptische, Scheibe oder als eckige, z.B. als drei- oder viereckige, Scheibe, ausgebildet sein.

Das Rotationselement 40 wird durch ein rotationselastisches Element 60 (siehe Figur 4) so vorgespannt, dass die beweglichen Elemente 32a, 33a, 34a von den Koppelelementen 52, 53, 54 "nach innen", d.h. in Richtung auf die zentrale Achse 30 gezogen werden. Das rotationselastische Element 60 ist in den Figuren 2 und 3 nicht sichtbar, da es zwischen der Grundplatte 6 und dem Rotationselement 40 angeordnet ist und von dem Rotationselement 40 verdeckt wird.

Figur 4 zeigt ein Ausführungsbeispiel eines rotationselastischen Elements 60 in einer perspektivischen schematischen Darstellung.

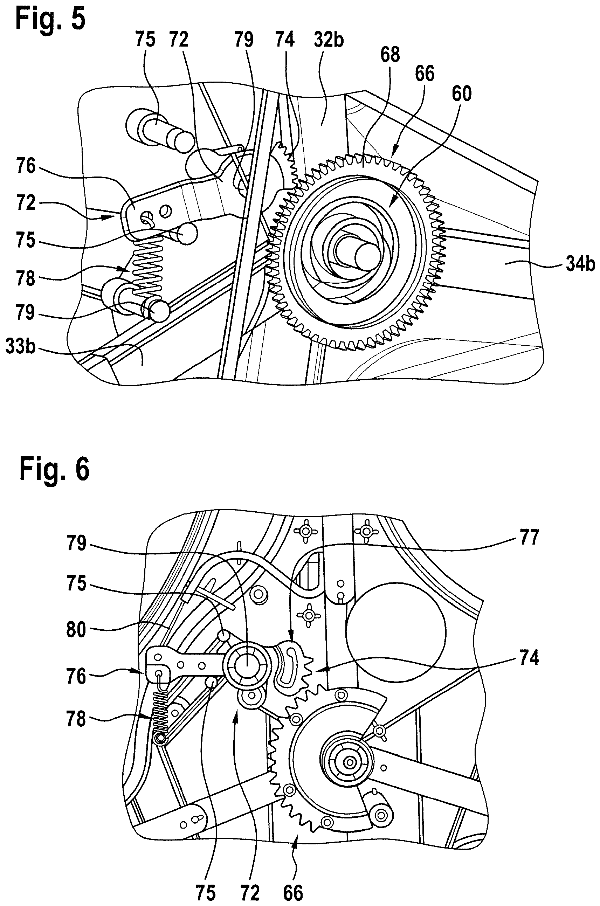

Figur 5 zeigt das rotationselastische Element 60 im eingebauten Zustand. In der Figur 5 ist das Rotationselement 40 nicht dargestellt, um einen freien Blick auf das rotationselastische Element 60 zu ermöglichen.

In dem in den Figuren 4 und 5 gezeigten Ausführungsbeispiel ist das rotationselastische Element 60 als Spiralfeder 60 ausgebildet, die sich von der Achse 30 ausgehend spiralförmig nach außen erstreckt.

Abgebogene Enden 62, 64 der Spiralfeder 60 sind mit dem Rotationselement 40 bzw. mit der Achse 30 oder der Grundplatte 6 verbunden, so dass das Rotationselement 40 die Spiralfeder 60 spannt bzw. entspannt, wenn es um die Achse 30 rotiert wird.

Das rotationselastische Element 60 ist dabei so ausgebildet und montiert, dass es das Rotationselement 40 derart antreibt, dass die beweglichen Elemente 32a, 33a, 34a durch das rotationselastische Element 60 in Richtung auf das Zentrum 28 gezogen werden. Dadurch wird die Länge der Arme 22, 23, 24 minimiert, und der Radhalter 2 wird durch die elastische Spannkraft des rotationselastischen Elements 60, die über das Rotationselement 40, die Koppelelemente 52, 53, 54 und die beweglichen Elemente 32a, 33a, 34a auf die Klauen 12, 13, 14 übertragen wird, an dem Rad 1 fixiert.

Die beweglichen Elemente 32a, 33a, 34a können gegen die Kraft des rotationselastischen Elements 60 mit Muskelkraft nach außen bewegt werden, um die Arme 22, 23, 24 zu verlängern, damit der Radhalter 2 bequem auf das Rad 1 aufgebracht oder von diesem entfernt werden kann. Durch die von dem rotationselastischen Element 60 erzeugte elastischen Kraft passt sich der Radhalter 2 in Rahmen des Bewegungsspielraumes (der maximalen Weglänge) der äußeren Elemente 32a, 33a, 34a in radialer Richtung automatisch an unterschiedliche Größen (Durchmesser D) des Rades 1 an. Ein erfindungsgemäßer Radhalter 2 kann daher einfach an Rädern 1 unterschiedlicher Größen montiert werden.

Am äußeren Umfang eines ringförmigen verzahnten Elements 68, welches das rotationselastische Element 60 umgibt, ist eine Außenverzahnung 66 ausgebildet. Das verzahnte Element 68 ist rotationsfest mit dem Rotationselement 40 verbunden, so dass das verzahnte Element 68 und das Rotationselement 40 nur gemeinsam um die zentrale Achse 30 rotieren können.

Die Außenverzahnung 66 kann über den gesamten äußeren Umfang des verzahnten Elements 68 (siehe Figur 5) oder nur über einen Teilbereich des äußeren Umfangs des verzahnte Elements 68 (siehe Figur 6) ausgebildet sein.

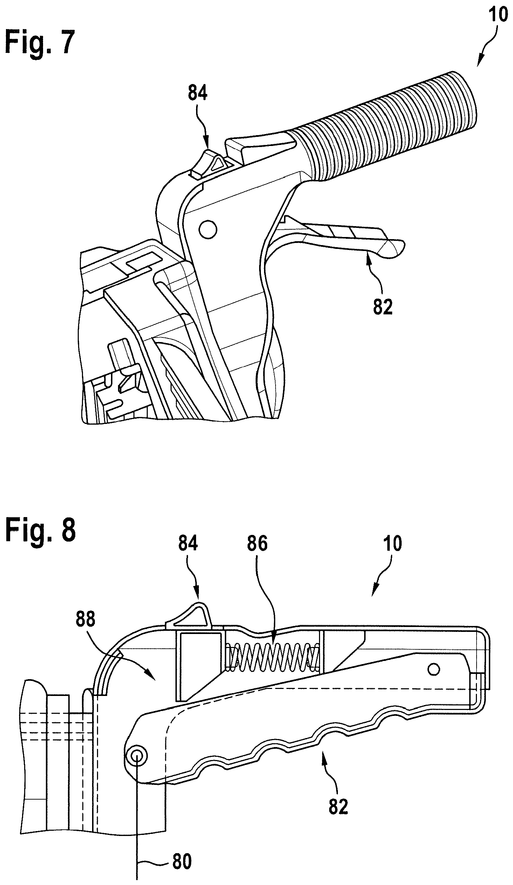

Das verzahnte Element 68 mit der Außenverzahnung 66 ist Teil einer Verriegelungsvorrichtung 70, die im Folgenden unter Bezugnahme auf die Figuren 6 und 7 näher beschrieben wird.

Die Verriegelungsvorrichtung 70 umfasst neben dem verzahnten Element 68 einen Verriegelungsmechanismus 72, der schwenkbar an einer Verriegelungsmechanismus-Achse 79 angebracht ist, die sich orthogonal von der Grundplatte 6 des Radhalters 2 erstreckt.

Der Verriegelungsmechanismus 72 ist in einer Ebene schwenkbar, die parallel zur Grundplatte 6 ausgerichtet ist. Der Schwenkbereich des Verriegelungsmechanismus 72 wird durch zwei Begrenzungselemente (Begrenzungsbolzen) 75 begrenzt.

An einem, in den Figuren 5 und 6 rechts dargestellten, ersten Ende weist der Verriegelungsmechanismus 72 eine Verzahnung 74 auf, deren Parameter mit den Parametern der Außenverzahnung 66 des verzahnte Elements 68 korrespondieren, so dass die Verzahnung 74 des Verriegelungsmechanismus 72 mit der Außenverzahnung 66 in Eingriff gebracht werden kann.

An einem gegenüberliegenden, in den Figuren 5 und 6 links dargestellten, zweiten Ende 76 ist der Verriegelungsmechanismus 72 mit einem ersten Federelement 78 gekoppelt. Das erste Federelement 78 ist über einen Federelement-Bolzen 79 an der Grundplatte 6 befestigt. Das erste Federelement 78 ist ausgebildet, den Verriegelungsmechanismus 72 in die in den Figuren 5 und 6 gezeigte Ausgangsposition zu ziehen.

Wenn sich der Verriegelungsmechanismus 72 in der Ausgangsposition befindet, greift die Verzahnung 74 des Verriegelungsmechanismus 72 nicht in die Außenverzahnung 66 des verzahnten Elements 68 ein. Folglich kann das Rotationselement 40 rotieren und die mit dem Rotationselement 40 gekoppelten äußeren Elemente 32a, 33a, 34a sind in radialer Richtung frei bewegbar.

Aufgrund der durch die Kopplungselemente 52, 53, 54 und das Rotationselement 40 hergestellten Kopplung bewegen sich die äußeren Elemente 32a, 33a, 34a synchron miteinander. Der Abstand der Krallen 12, 13, 14 vom Zentrum, der den halben Durchmesser (Radius) des Radhalters 2 definiert, kann daher einfach an den Durchmesser D des Rades 1 angepasst werden, an dem der Radhalter 2 angebracht werden soll.

An dem zweiten Ende 76 des Verriegelungsmechanismus 72 ist auch ein Drahtzug (Bowdenzug) 80 angebracht, der es ermöglicht, den Verriegelungsmechanismus 72 durch Betätigen eines Verriegelungselements 82 (siehe Figuren 7 und 8) um die Verriegelungsmechanismus-Achse 79 aus der in der Figur 6 gezeigten Ausgangsposition in eine Verriegelungsposition zu schwenken, in der die Verzahnung 74 des Verriegelungsmechanismus 72 in die Außenverzahnung 66 des verzahnten Elements 68 eingreift. Durch diesen Eingriff wird eine Rotation des Rotationselements 40 verhindert. Dadurch sind die äußeren Elemente 32a, 33a, 34a der Arme 22, 23, 24, die durch die Koppelelemente 52, 53, 54 mit dem Rotationselement 40 gekoppelt sind, nicht mehr in radialer Richtung beweglich und fixieren den Radhalter 2 sicher am Rad 1.

Anstelle eines Drahtzuges 80 kann auch eine (in den Figuren nicht gezeigte) Hydraulik vorgesehen sein, die es ermöglicht, den Verriegelungsmechanismus 72 durch Betätigen des Verriegelungselements 82 von der Ausgangsposition in die Verriegelungsposition zu bewegen.

Aufgrund eines zwischen der Verzahnung 74 und der Verriegelungsmechanismus-Achse 79 im Verriegelungsmechanismus 72 ausgebildeten Freiraumes 77 ist die Verzahnung 74 elastisch. Durch dieser Elastizität kann ein Zahn der Verzahnung 74, der bei einer ungünstigen relativen Positionierung der Verzahnung 74 und der Außenverzahnung 66 zu einer Blockade führen könnte, etwas zurückweichen und in eine benachbarte Zahnlücke der Außenverzahnung 66 rutschen. Eine unerwünschte Blockade zwischen der Verzahnung 74 des Verriegelungsmechanismus 72 und der Außenverzahnung 66 des verzahnten Elements 68 kann so verhindert werden. Eine Blockade zwischen der Verzahnung 74 des Verriegelungsmechanismus 72 und der Außenverzahnung 66 könnte dazu führen, dass der Verriegelungsmechanismus 72 nicht aus der Ausgangsposition in die Verriegelungsposition geschwenkt werden kann.

Der Verriegelungsmechanismus 72 und die Außenverzahnung 66 des verzahnten Elements 68 können aus Metall und/oder aus Kunststoff gefertigt sein.

Die Figuren 7 und 8 zeigen zwei verschiedene mögliche Ausführungsbeispiele eines Verriegelungselements 82, das zum Bewegen des Verriegelungsmechanismus 72 an/in einem Tragegriff 10 des Radadapters 2 ausgebildet ist.

In dem in der Figur 8 gezeigten Tragegriff 10 ist ein zweites Federelement 86 vorgesehen, das ausgebildet ist, das Verriegelungselement 82 in eine Ausgangsposition zu drücken, in der sich der über den Drahtzug 80 mit dem Verriegelungselement 82 gekoppelte Verriegelungsmechanismus 72 in seiner Ausgangsposition befindet. Wenn der Verriegelungsmechanismus 72 in seiner Ausgangsposition angeordnet ist, ist die Verzahnung 74 des Verriegelungsmechanismus 72 nicht im Eingriff mit der Außenverzahnung 66 des verzahnte Elements 68.

Durch Betätigen (Anziehen) des Verriegelungselements 82 wird der Verriegelungsmechanismus 72 über den Drahtzug 80 aus der Ausgangsposition in die Eingriffsposition bewegt. Dabei wird seine Verzahnung 74 in Eingriff mit der Außenverzahnung 66 des verzahnten Elements 68 gebracht, wodurch eine zusätzliche mechanische Spannung auf die beweglichen äußeren Elemente 32a, 33a, 34a aufgebracht und ein weiteres Rotieren des Rotationselements 40 verhindert wird, um den Radhalter 2 sicher an dem Rad 1 zu befestigen.

Durch einen in dem Tragegriff 10 ausgebildeten Verriegelungselement-Fixiermechanismus 88 ist das Verriegelungselement 82 in der betätigten Position, in der sich der Verriegelungsmechanismus 72 in seiner Eingriffsposition befindet, fixierbar. Wenn das Verriegelungselement 82 in der betätigten Position fixiert ist, wird ein Rotieren des Rotationselements 40 durch den Eingriff der Verzahnung 74 des Verriegelungsmechanismus 72 in die Außenverzahnung 66 des verzahnte Elements 68 verhindert, d.h. das Rotationselement 40 bleibt blockiert, auch wenn die Hand des Bedieners vom Verriegelungselement 82 entfernt wird.

Durch Betätigen eines im Tragegriff 10 ausgebildeten Entriegelungselements 84 kann die Fixierung des Verriegelungselements 82 gelöst werden, um die beweglichen äußeren Elemente 32a, 33a, 34a zu lösen und die Arme 22, 23, 24 zu entspannen, so dass der Radhalter 2 einfach vom Rad 1 entfernt werden kann.

## Patentansprüche

1. Radhalter (2) zur Befestigung an einem Rad (1), insbesondere an einem Rad (1) eines Kraftfahrzeugs, wobei der Radhalter (2) aufweist:
wenigstens zwei Arme (22, 23, 24), die sich in einer radialen Richtung nach außen erstrecken; wobei jeder der Arme (22, 23, 24) wenigstens ein in radialer Richtung bewegliches Element (32, 33, 34) aufweist, das in radialer Richtung beweglich ist; zur Anlage an dem Rad (1) vorgesehen ist;
einen beweglichen Verriegelungsmechanismus (72), der in eine Verriegelungsposition bewegbar ist, in der er die beweglichen Elemente (32, 33, 34) gegen das Rad (1) spannt und in einer gespannten Position fixiert;
ein Verriegelungselement (82), das derart ausgebildet ist, dass der Verriegelungsmechanismus (72) durch Betätigen des Verriegelungselements (82) in die Verriegelungsposition schwenkbar ist; und
ein verzahntes Element (68), das mechanisch mit den beweglichen Elementen (32, 33, 34) gekoppelt ist, wobei der Verriegelungsmechanismus (72) in das verzahnte Element (68) eingreift, wenn sich der Verriegelungsmechanismus (72) in der Verriegelungsposition befindet.

2. Radhalter (2) nach Anspruch 1 mit einem Entriegelungselement (84), das derart ausgebildet ist, dass eine Fixierung der beweglichen Elemente (32, 33, 34) durch Betätigen des Entriegelungselements (84) lösbar ist.

3. Radhalter (2) nach einem der vorangehenden Ansprüche, mit einem Tragegriff (10) zum Tragen des Radhalters (2), wobei wenigstens eines von dem Verriegelungselement (82) und dem Entriegelungselement (84) in oder an dem Tragegriff (10) ausgebildet ist.

4. Radhalter (2) nach einem der vorangehenden Ansprüche, wobei der Tragegriff (10), das Verriegelungselement (82) und/oder der Entriegelungselement (84) so ausgebildet sind, dass das Verriegelungselement (82) und/oder das Entriegelungselement (84) sowohl für Links- als auch für Rechtshänder gut bedienbar sind.

5. Radhalter (2) nach einem der vorangehenden Ansprüche, wobei wenigstens eines von dem verzahnten Element (68) und dem Verriegelungsmechanismus (72) bogen- oder kreisförmig ausgebildet ist.

6. Radhalter (2) nach einem der vorangehenden Ansprüche, wobei der Verriegelungsmechanismus (72) wenigstens teilweise elastisch ist.

7. Radhalter (2) nach einem der vorangehenden Ansprüche, wobei der Verriegelungsmechanismus (72) durch einen Drahtzug (80) oder hydraulisch mit dem Verriegelungselement (82) gekoppelt ist.

8. Radhalter (2) nach einem der vorangehenden Ansprüche mit einem Verriegelungselement-Fixiermechanismus (88), der ausgebildet ist, das Verriegelungselement (82) in einer verriegelten Position zu fixieren.

9. Radhalter (2) nach einem der vorangehenden Ansprüche mit einem Federelement (86), das ausgebildet ist, das Verriegelungselement (82) in eine Ausgangsposition zu bewegen, in der die beweglichen Elemente (32, 33, 34) nicht fixiert sind.

## Claims

1. A wheel clamp (2) for attachment to a wheel (1), in particular to a wheel (1) of a motor vehicle, the wheel clamp (2) comprising:
at least two arms (22, 23, 24), which extend outward in a radial direction; each of the arms (22, 23, 24) having at least one movable element (32, 33, 34), which is movable in the radial direction and is provided for abutment on the wheel (1); and
a movable locking mechanism (72), which is movable into a locking position, in which it clamps the movable elements (32, 33, 34) against the wheel (1) and fixes the same in a tensioned position;
a locking member (82), which is designed such that the locking mechanism (72) is pivotable into the locking position by operation of the locking member (82); and
a toothed element (68), which is mechanically coupled to the movable elements (32, 33, 34), wherein the locking mechanism (72) engages with the toothed element (68) when the locking mechanism (72) is in the locking position.

2. The wheel clamp (2) according to claim 1, comprising an unlocking member (84), which is designed such that a fixation of the movable elements (32, 33, 34) can be released by operation of the unlocking member (84).

3. The wheel clamp (2) according to any of the preceding claims,
comprising a carrying handle (10) for carrying the wheel clamp (2), wherein at least one of the locking member (82) and the unlocking member (84) is formed in or on the carrying handle (10).

4. The wheel clamp (2) according to any of the preceding claims,
wherein the carrying handle (10), the locking member (82) and/or the unlocking member (84) are designed such that the locking member (82) and/or the unlocking member (84) are easy to operate for both left-handed and right-handed operators.

5. The wheel clamp (2) according to any of the preceding claims,
wherein at least one of the toothed member (68) and the locking mechanism (72) has an arcuate or circular shape.

6. The wheel clamp (2) according to any of the preceding claims,
wherein the locking mechanism (72) is at least partially elastic.

7. The wheel clamp (2) according to any of the preceding claims,
wherein the locking mechanism (72) is coupled to the locking member (82) by a wire cable (80) or hydraulically.

8. The wheel clamp (2) according to any of the preceding claims, comprising a locking member fixing mechanism (88), which is designed to fix the locking member (82) in a locked position.

9. The wheel clamp (2) according to any of the preceding claims, comprising a spring element (86), which is designed to move the locking member (82) into an initial position, in which the movable elements (32, 33, 34) are not fixed.

## Revendications

1. Support de roue (2) à fixer à une roue (1), en particulier à une roue (1) de véhicule automobile, le support de roue (2) présentant :
au moins deux bras (22, 23, 24) qui s'étendent vers l'extérieur dans une direction radiale ; chacun des bras (22, 23, 24) présentant au moins un élément mobile en direction radiale (32, 33, 34), qui est mobile en direction radiale ; prévu pour une installation sur la roue (1) ;
un mécanisme de verrouillage mobile (72) qui peut être déplacé dans une position de verrouillage dans laquelle il serre les éléments mobiles (32, 33, 34) contre la roue (1) et les fixe dans une position serrée ;
un élément de verrouillage (82) réalisé de telle sorte que le mécanisme de verrouillage (72) peut être pivoté dans la position de verrouillage en actionnant l'élément de verrouillage (82) ; et
un élément denté (68) qui est couplé mécaniquement aux éléments mobiles (32, 33, 34), le mécanisme de verrouillage (72) s'engageant dans l'élément denté (68) lorsque le mécanisme de verrouillage (72) se trouve dans la position de verrouillage.

2. Le support de roue (2) selon la revendication 1 avec un élément de déverrouillage (84) qui est réalisé de telle sorte qu'une fixation des éléments mobiles (32, 33, 34) peut être détachée en actionnant l'élément de déverrouillage (84).

3. Le support de roue (2) selon l'une quelconque des revendications précédentes avec une poignée de transport (10) permettant de transporter le support de roue (2), dans lequel au moins un des éléments de verrouillage (82) et de déverrouillage (84) est réalisé dans ou sur la poignée de transport (10).

4. Le support de roue (2) selon l'une quelconque des revendications précédentes, dans lequel la poignée de transport (10), l'élément de verrouillage (82) et/ou l'élément de déverrouillage (84) sont réalisés de telle sorte que l'élément de verrouillage (82) et/ou l'élément de déverrouillage (84) peuvent être manipulés aussi bien par des gauchers que par des droitiers.

5. Le support de roue (2) selon l'une quelconque des revendications précédentes, dans lequel l'un au moins de l'élément denté (68) et du mécanisme de verrouillage (72) est réalisé en forme d'arc ou de cercle.

6. Le support de roue (2) selon l'une quelconque des revendications précédentes, dans lequel le mécanisme de verrouillage (72) est au moins partiellement élastique.

7. Le support de roue (2) selon l'une quelconque des revendications précédentes, dans lequel le mécanisme de verrouillage (72) est couplé à l'élément de verrouillage (82) par un fil de traction (80) ou hydrauliquement.

8. Le support de roue (2) selon l'une quelconque des revendications précédentes avec un mécanisme de fixation d'élément de verrouillage (88) qui est réalisé de manière à fixer l'élément de verrouillage (82) dans une position verrouillée.

9. Le support de roue (2) selon l'une quelconque des revendications précédentes avec un élément ressort (86) qui est réalisé de manière à déplacer l'élément de verrouillage (82) dans une position de départ dans laquelle les éléments mobiles (32, 33, 34) ne sont pas fixés.
